# EUROPEAN PATENT SPECIFICATION

(11) **EP 1 580 863 B1**
(45) Date of publication and mention of the grant of the patent: **23.11.2016**
(21) Application number: 04007342.1
(22) Date of filing: 26.03.2004
(51) Int. Cl.: H02J 7/00, H04M 1/04, G06F 1/16, G06F 1/20

(54) **Handheld electronic device cradle with enhanced heat-dissipating capability**
Halterung eines tragbaren elektronischen Gerätes mit verbesserter Wärmeableitungsfähigkeit
Berceau pour dispositif électronique portatif avec capacité thermodissipatrice ameliorée

(43) Date of publication of application: 28.09.2005
(60) Divisional application: 10165328.5
(73) Proprietor: HTC Corporation, Taoyuan City 330 (TW)
(72) Inventor: Lee, Jensen, Sindian City Taipei County 231 (TW); Chen, Yili, Sindian City Taipei County 231 (TW); Tsai, Chil-Wei, Sindian City Taipei County 231 (TW)
(74) Representative: Becker Kurig Straus

(56) References cited:
- EP-A- 1 217 710
- WO-A1-98/50994
- WO-A1-02/093708
- US-A- 5 230 016
- US-A- 5 381 043
- US-A- 5 930 110
- US-A1- 2002 094 849
- US-A1- 2002 181 201
- US-B1- 6 356 054
- US-B1- 6 645 666

## Description

### BACKGROUND OF THE INVENTION

### Field of the Invention

The present invention relates to a cradle for a handheld electronic device. More particularly, the present invention relates to a handheld electronic device cradle with enhanced heat-dissipating capability.

### Description of the Related Art

In this information conscious society, our reliance on electronic products increases every day. Following our need for a higher communicating speed, better performance, a lighter device and a compact design, a variety of handheld electronic devices are out in the market. At present, the most common handheld electronic devices include cellular phones, smart phones and personal digital assistants (PDAs). Through these handheld electronic devices, communication is no longer restricted to the office. In fact, people can communicate with each other anywhere and at any time.

Through the increase in processing speed of CPUs (central processing units) and the development of Internet and wireless communication techniques, handheld electronic devices are no longer used mainly for single-purposed information processing. The handheld electronic devices are now often used as a converged device for performing wireless communication, connecting to Internet, playing games and serving as a multi-media unit. Because the handheld electronic device is usually powered by a rechargeable battery, battery capacity is a principal factor determining the duration of operation of the handheld electronic device. When the electrical power of the rechargeable battery runs out, the user usually puts the handheld electronic device on a cradle which is connected with a power supply, whereby the battery can be charged.

It should be noted that, during the charging of the battery, the temperature of the handheld electronic device will increase due to heat generated for charging the battery. The lift of the temperature of the handheld electronic device is exacerbated for a converged handheld electronic device, for example a smart phone, which has a variety of functions combined in a single device. When the smart phone is put on the cradle, it simultaneously executes data exchange with a host computer connected with the cradle, and wireless communication with other mobile phones through a cellular phone network, in addition to the work that the battery in the smart phone is charged by the cradle. Sometimes, the temperature increased may exceed the rated temperature limitation of the smart phone. When this happens, the smart phone is not able to function normally. Moreover, the temperature increased may cause the battery to overheat, which could lead to a disastrous explosion. Therefore, how to effectively remove heat generated by the handheld electronic device from the device when it is put on the cradle for charging its battery becomes an issue to handheld electronic device manufacturers.

US 5 230 016 discloses a holder for an electronic appliance, such as a radio telephone apparatus, including a cooling fan activated by a temperature sensing control circuit.

US 2002/094849 A1 discloses methods and systems for indicating battery information to cellular telephone users when a cellular telephone is near an associated battery charger. When a cellular telephone is within a predetermined range of the battery charger, the charger and telephone form a communication link The link allows the charger (or telephone) to analyze the status of the telephone's battery, generate alert commands and/or generate sensory alerts as needed in order to warn a user to charge the battery. The charger can also be adapted to establish a communication link with a personal computer ("PC") and to transmit similar commands to the personal computer via the link to allow the PC to generate sensory alerts.

EP-A2-1126377 discloses a method and apparatus for using a mobile device charging cradle to enable short distance wireless communication between a personal computer and at least one other short distance wireless communication enabled electronic device. In a preferred embodiment of the invention, a short distance wireless radio and antenna are added to a charging cradle to produce a combination charging and short distance wireless communication enabled cradle which is coupled via a data cable to a personal computer. The short distance wireless communication enabled cradle enables a system in which a legacy architecture personal computer may communicate with other short distance RF communication enabled electronic devices.

### SUMMARY OF THE INVENTION

Accordingly, the object of the present invention is to prevent an overheating of the battery of a handheld electronic device during a charging progress. This problem of the prior art is solved by the cradle for a handheld electronic device according to claim 1 of the present invention. In one embodiment, the present invention provides a cradle for charging a battery in a handheld electronic device and a spare rechargeable battery, the handheld electronic device having a connection port, the cradle comprising a casing having an insertion slot and a ventilation slot, wherein the insertion slot is adapted to have a portion of the handheld electronic device inserted in it and wherein the casing is adapted to have a portion of the spare rechargeable battery inserted over the ventilation slot; a first connection port disposed in the insertion slot and adapted for coupling with the connection port of the handheld electronic device and electrically connected to a power supply; a second connection port disposed nearby the ventilation slot and adapted for coupling with the inserted portion of the spare rechargeable battery and electrically connected to the power supply; an electric fan located within the casing, connected to the power supply, and disposed between the insertion slot and the ventilation slot, wherein the electric fan is arranged for generating an air flow flowing from an interior of the handheld electronic device to the interior of the casing and leaving away from the casing via the ventilation slot (112).

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention. In the drawings,
Fig. 1 is a perspective view showing a cradle for handheld electronic device according to a first preferred embodiment of the present invention.
Fig. 2 is a perspective view showing an interior of the cradle of Fig. 1.
Fig. 3 is a perspective view showing a handheld electronic device for use with the cradle according to the first embodiment of the present invention.
Fig. 4 is a perspective view showing the cradle of the first embodiment with the handheld electronic device of FIG. 3 and a spare rechargeable battery inserted therein.
Fig. 5 is a partially enlarged view of a bottom of the handheld electronic device of Fig. 3 showing a heat dissipation opening thereof.
Fig. 6 is a perspective view showing a cradle for handheld electronic device according to a second embodiment of the present invention, wherein a handheld electronic device is inserted in the cradle.

### DESCRIPTION OF THE PREFERRED EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

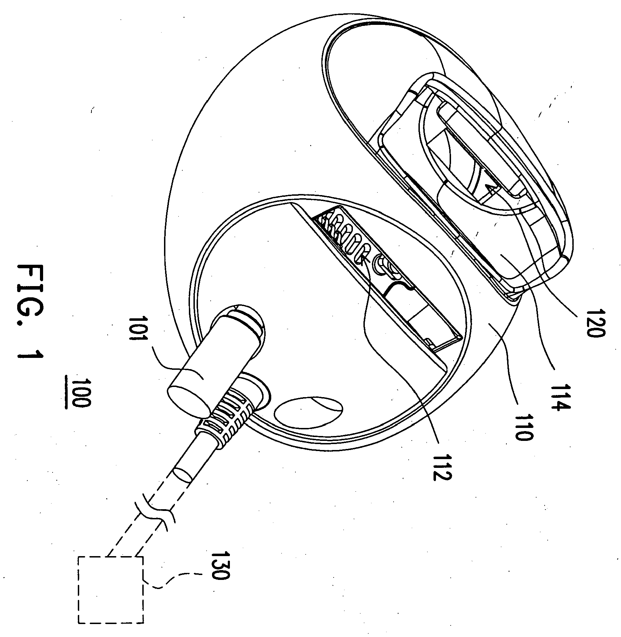

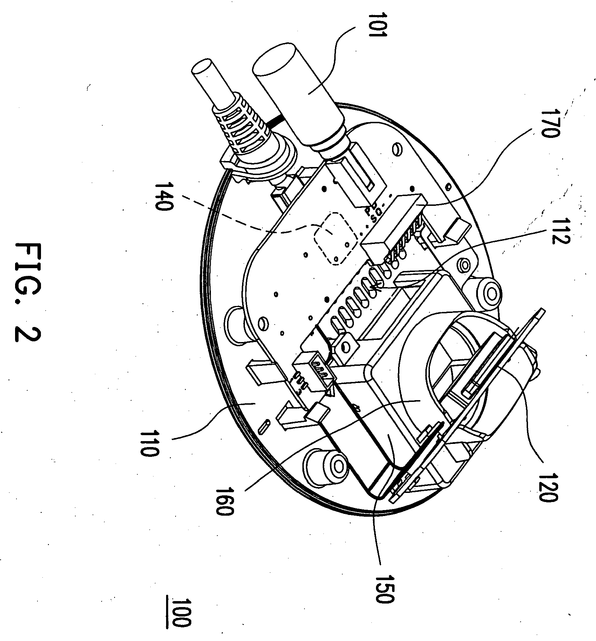

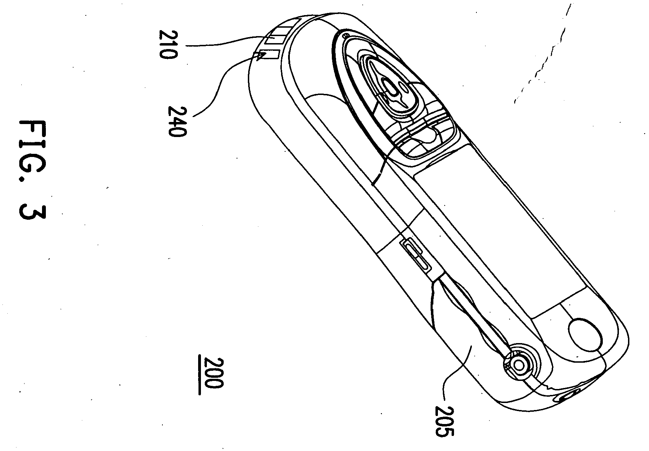

Fig. 1 is a perspective view showing a cradle 100 for handheld electronic device according to a first preferred embodiment of the present invention. Fig. 2 is a perspective view showing that a casing 110 of the cradle 100 of Fig. 1 is removed so that an interior of the cradle 100 can be seen. Fig. 3 is a perspective view of a handheld electronic device 200 for use with the cradle 100. As shown in Figs. 1 through 3, the cradle 100 mainly comprises the casing 110, a first connection port 120 and an electrical fan 150. In this embodiment, the cradle 100 provides electrical power to a handheld electronic device 200 for charging a battery (not shown) inside the handheld electronic device 200 and performing data exchange for the handheld electronic device 200 with a host computer (not shown) connected to the cradle 100 via a cable 101 of the cradle 100. The handheld electronic device 200 has a connection port 210 of the handheld electronic device 200. The handheld electronic device 200 in the present embodiment is, for example, a smart mobile phone with data processing and wireless communication capabilities, which is a CDMA (Code-Division Multiple Access) smart phone in particular.

The casing 110 has an insertion slot 114 for accommodating the handheld electronic device 200. The first connection port 120 is set up inside the insertion slot 114 of the casing 110 for engaging with the connection port 210 of the handheld electronic device 200 and electrically connecting to an external power supply 130. The power supply 130 is a common indoor AC/DC adapter for connecting with an AC socket. When the handheld electronic device 200 is plugged into the insertion slot 114, the first connection port 120 is electrically connected to the connection port 210 of the handheld electronic device 200 for charging the rechargeable battery inside the handheld electronic device 200.

The cradle 100 further comprises a data exchange module 140 set up inside the casing 110 and electrically connected to the first connection port 120. The data exchange module 140 is connected to a host computer through the electrical cable 101 having a universal serial bus (USB) connector (not shown) or other type connector that can electrically connect with the host computer. The host computer can be a notebook computer or a desktop computer.

It should be noted that all the functions (including wireless communication) provided by the handheld electronic device 200 can operate normally without any overheating when the handheld electronic device 200 is plugged into the insertion slot 114 of the cradle 100 to charge the battery and perform data exchange and wireless communication.

The electrical fan 150 is set up inside the casing 110 and electrically connected to the power supply 130 for cooling the handheld electronic device 200. The fan 150 in this embodiment is a mass flow axial fan for drawing hot air from the handheld electronic device 200. The casing 110 has at least a ventilation slot 112 to provide the cradle 110 with an air outlet. The ventilation slot 112 is positioned close to the first connection port 120 so that heat can be directly removed from the handheld electronic device 200. An activation of the fan 150 forms an air flow to flow from an interior of the handheld electronic device 200 into the interior of the casing 100. Then the air flow leaves the interior of the casing 100 via the ventilation slot 112. Hence, heat produced by the handheld electronic device 200 during its insertion in the cradle 100 is carried away. The heat is generated mainly by an operation of a CPU (not shown) and the charging of the battery of handheld electronic device 200.

To enhance the heat dissipating capability of the fan 150 for drawing heat away from the handheld electronic device 200, the cradle 100 further comprises a sealing element 160. The sealing element 160 is set up inside the casing 110 around the first connection port 120. When the connection port 210 of the handheld electronic device 200 is coupled to the first connection port 120, the sealing element 160 fittingly engages a bottom of the handheld electronic device 200 around the connection port 210 of the handheld electronic device 200. Hence, the air flow generated by the fan 150 can effectively draw the hot air in the interior of the handheld electronic device away therefrom. The sealing element 160 is fabricated using an elastic material such as rubber.

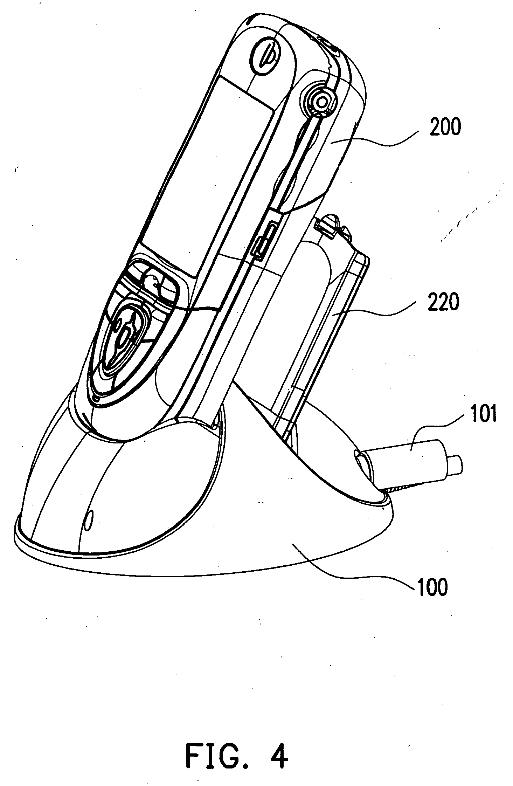

Fig. 4 is a perspective view showing a handheld electronic device 200 and a spare rechargeable battery 220 inserted into the cradle 100 according to the first preferred embodiment of the present invention. As shown in Figs. 2 and 4, the cradle 100 further comprises a second connection port 170. The second connection port 170 is set up on the casing 110 and electrically connected to the power supply 130. Furthermore, the second connection port 170 is electrically connected to the spare rechargeable battery 220 for recharging the spare rechargeable battery 220. Hence, the cradle 100 can provide electrical power to charge the spare rechargeable battery 220 and the built-in battery inside the handheld electronic device 200 in addition to providing the electrical power necessary for the handheld electronic device 200 to perform the data exchange operation with the host computer and wireless communication with other wireless device via a wireless communication network.

As shown in Figs. 2 and 3, the handheld electronic device 200 has an outer casing 205 with a heat-dissipating opening 240 therein. The connection port 210 of the handheld electronic device 200 is set up in the bottom of the outer casing 205, and used for connecting with the first connection port 120 in the cradle 100. When the handheld electronic device 200 is inserted into the cradle 100, the air flow generated by the fan 150 draws the hot air in the handheld device out via the opening 240.

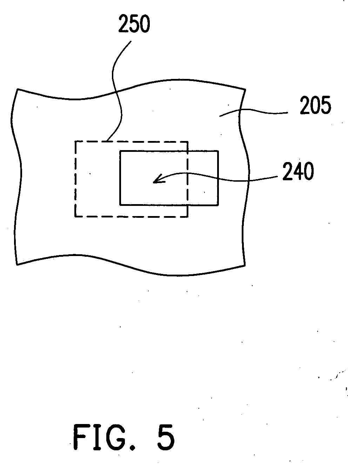

Fig. 5 is a partially enlarged view of the bottom of the outer casing 205 of the handheld electronic device 200 shown in Fig. 3. As shown in Fig. 5, the handheld electronic device 200 further comprises a valve 250. The valve 250 is a movable flap mounted on the outer casing 205. The valve 250 is devised to open or block the heat-dissipating opening 240. In normal use when the handheld electronic device 200 is not inserted in the cradle 100, the valve 250 covers the heat-dissipating opening 240 to prevent dust and dirt from entering the handheld electronic device 200. The cradle 100 has a valve-opening element (not shown) for opening the valve 250 when the handheld electronic device 200 is placed in the cradle 100. In this embodiment, the valve 250 is a spring-loaded, pivotably connected door, and the valve-opening element is a post. When the handheld electronic device 200 is inserted into the cradle 100, the valve-opening element pushes the valve upwardly to open the opening 240 so that the interior of the handheld electronic device communicates with the interior of the cradle.

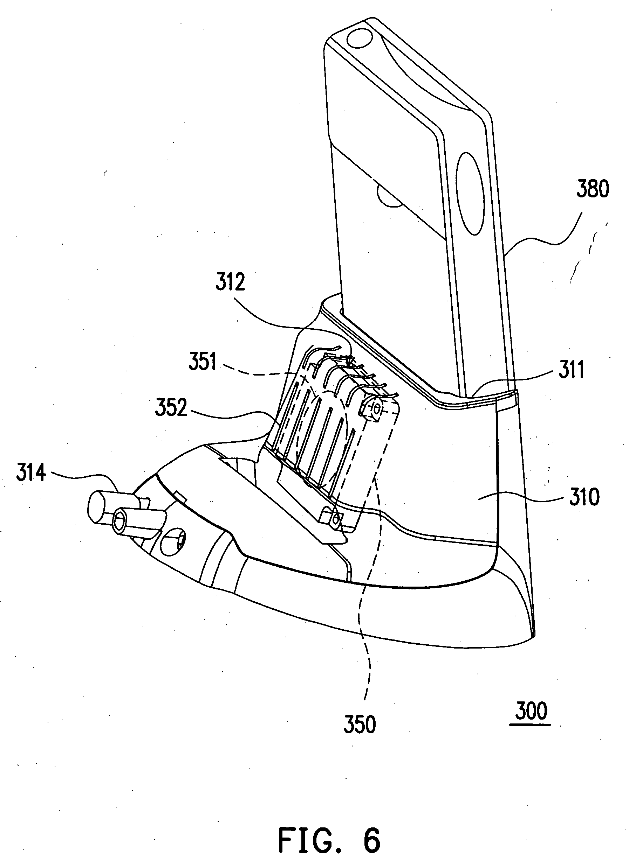

Fig. 6 is a perspective view showing a handheld electronic device 380 plugged into a cradle 300 according to a second preferred embodiment of the present invention. As shown in Fig. 6, the cradle 300 has a casing 310 with an insertion slot 311 and a cable 314 for connecting with a host computer (not shown). The handheld electronic device 380 is inserted into the insertion slot 311. The cradle 300 charges a built-in battery (not shown) inside the handheld electronic device 380 and connects the handheld electronic device 380 with the host computer to perform data exchange. In the meantime, the handheld electronic device 380 also communicates with other electronic devices by wireless communication. The casing 310 has substantially vertically oriented air inlet slots 352 facing rearwards and substantially horizontally oriented air outlet slots 312 facing upwards. The air inlet slots 352 and the air outlet slots 312 are generally perpendicular to each other. A fan-mounting seat 350 is set up in the casing 310 between the air inlet slots 352 and the air outlet slots 312. An electric fan 351, for example, a blower type fan is fixed to the fan-mounting seat 350. When the fan 351 is activated, the fan 351 generates an air flow that enters the cradle 300 via the air inlet slots 352 and leaves the cradle 300 via the air outlet slots 312. After leaving the outlet slots 312, the air flow impinges at a region of a rear side of handheld electronic device 380 where the built-in battery of the handheld electronic device 380 neighbors. Thus, heat generated by handheld electronic device 380 during its insertion in the cradle 380 can be carried away by the air flow.

It should be noted that the handheld electronic devices 200, 380 in the two embodiments are prevented from performing some functions, like the wireless communication, if the handheld electronic devices are not charged by the cradles 100, 300, but by a traveling charger which does not have the forced-air cooling ability of the cradles according to the present invention.

In conclusion, the invention provides a cradle with an electric fan for producing a forced air circulation. Through the forced air circulation, heat produced by any handheld electronic device placed in the cradle is rapidly carried away so that the worry that the device may be damaged due to too heat can be ceased.

## Claims

1. A cradle (100) for charging a battery in a handheld electronic device (200) and a spare rechargeable battery (220), the handheld electronic device (200) having a connection port (210) and a heat-dissipating opening (240), the cradle (100) comprising:
a casing (110) having an insertion slot (114) and a ventilation slot (112), wherein the insertion slot (114) is adapted to have a portion of the handheld electronic device (200) inserted in it and wherein the casing (110) is adapted to have a portion of the spare rechargeable battery (220) inserted over the ventilation slot (112);
a first connection port (120) disposed in the insertion slot (114) and adapted for coupling with the connection port (210) of the handheld electronic device (200) and electrically connected to a power supply;
a second connection port (170) disposed nearby the ventilation slot (112) and adapted for coupling with the inserted portion of the spare rechargeable battery (220) and electrically connected to the power supply;
an electric fan (150) located within the casing (110), connected to the power supply, and
disposed between the insertion slot (114) and the ventilation slot (112), wherein the electric fan (150) is arranged for generating an air flow flowing from an interior of the handheld electronic device (200) to the interior of the casing (110) and leaving away from the casing (110) via the ventilation slot (112).

2. The cradle (100) of claim 1, wherein the casing (110) of the cradle (100) further comprises a sealing element set up around the insertion slot (114) and is adapted for fittingly engaging the inserted portion of the handheld electronic device (200).

## Patentansprüche

1. Halterung (100) zum Laden einer Batterie in einer tragbaren elektronischen Vorrichtung (200) und einer wiederaufladbaren Ersatzbatterie (220), wobei die tragbare elektronische Vorrichtung (200) einen Verbindungsanschluss (210) und eine Wärmeabführöffnung (240) aufweist, und wobei die Halterung (100) umfasst:
ein Gehäuse (110) mit einem Einsetzschlitz (114) und einem Belüftungsschlitz (112), wobei der Einsetzschlitz (114) angepasst ist, so dass ein Abschnitt der tragbaren elektronischen Vorrichtung (200) darin eingesetzt werden kann und wobei das Gehäuse (110) angepasst ist, so dass ein Abschnitt der wiederaufladbaren Ersatzbatterie (220) oberhalb des Belüftungsschlitzes (112) eingesetzt werden kann;
einen ersten Verbindungsanschluss (120), der in dem Einsetzschlitz (114) angeordnet ist und angepasst ist zum Koppeln mit dem Verbindungsanschluss (210) der tragbaren elektronischen Vorrichtung (200) und der elektrisch mit einer Stromversorgung verbunden ist;
einen zweiten Verbindungsanschluss (170), der nahe dem Belüftungsschlitz (112) angeordnet ist und angepasst ist zum Koppeln mit dem eingesetzten Abschnitt der wiederaufladbaren Ersatzbatterie (220) und der elektrisch mit der Stromversorgung verbunden ist;
einen elektrischen Lüfter (150), der sich in dem Gehäuse (110) befindet, mit der Stromversorgung verbunden ist und zwischen dem Einsetzschlitz (114) und dem Belüftungsschlitz (112) angeordnet ist, wobei der elektrische Lüfter (150) angeordnet ist zur Erzeugung eines Luftstroms, der von einem Inneren der tragbaren elektronischen Vorrichtung (200) zu dem Inneren des Gehäuses (110) fließt und das Gehäuse (110) über den Belüftungsschlitz (112) von dem Gehäuse (110) weg verlässt.

2. Halterung (100) gemäß Anspruch 1, wobei das Gehäuse (110) der Halterung (100) weiterhin ein Versiegelungselement umfasst, das um den Einsetzschlitz (114) herum eingerichtet ist und angepasst ist, um passend mit dem eingesetzten Abschnitt der tragbaren elektronischen Vorrichtung (200) in Eingriff zu stehen.

## Revendications

1. Socle (100) pour charger une batterie dans un dispositif électronique portatif (200) et une batterie rechargeable de rechange (220), le dispositif électronique portatif (200) ayant un port de connexion (210) et une ouverture de dissipation de chaleur (240), le socle (100) comprenant :
un boîtier (110) ayant une fente d'insertion (114) et une fente de ventilation (112), dans lequel la fente d'insertion (114) est adaptée pour qu'une portion du dispositif électronique portatif (200) soit insérée à l'intérieur et dans lequel le boîtier (110) est adapté pour qu'une portion de la batterie rechargeable de rechange (220) soit insérée par-dessus la fente de ventilation (112) ;
un premier port de connexion (120) disposé dans la fente d'insertion (114) et adapté pour se coupler avec le port de connexion (210) du dispositif électronique portatif (200) et connecté électriquement à une alimentation électrique ;
un second port de connexion (170) disposé à proximité de la fente de ventilation (112) et adapté pour se coupler la portion insérée de la batterie rechargeable de rechange (220) et électriquement connecté à l'alimentation électrique ;
un ventilateur électrique (150) situé à l'intérieur du boîtier (110), connecté à l'alimentation électrique, et disposé entre la fente d'insertion (114) et la fente de ventilation (112), dans lequel le ventilateur électrique (150) est agencé pour générer un flux d'air s'écoulant à partir d'un intérieur du dispositif électronique portatif (200) vers l'intérieur du boîtier (110) et quittant le boîtier (110) via la fente de ventilation (112).

2. Socle (100) selon la revendication 1, dans lequel le boîtier (110) du socle (100) comprend en outre un élément de scellement étanche ménagé autour de la fente d'insertion (114) et est adapté pour venir en prise adéquatement avec la portion insérée du dispositif électronique portatif (200).
